# EUROPÄISCHE PATENTSCHRIFT

(11) **EP 2 072 962 B1**
(45) Veröffentlichungstag und Bekanntmachung des Hinweises auf die Patenterteilung: **19.03.2014**
(21) Anmeldenummer: 08105991.7
(22) Anmeldetag: 16.12.2008
(51) Int. Cl.: G01D 5/20

(54) **Sensor**
Sensor
Capteur

(30) Priorität: 21.12.2007 DE 102007062906
(43) Veröffentlichungstag der Anmeldung: 24.06.2009
(73) Patentinhaber: SICK AG, 79183 Waldkirch (DE)
(72) Erfinder: Baak, Josef, 79183, Waldkirch (DE)
(74) Vertreter: Ludewigt, Christoph

(56) Entgegenhaltungen:
- DE-A1- 10 013 525
- US-A- 5 565 769

## Beschreibung

Die Erfindung betrifft einen magnetischen oder induktiven Sensor zur Erfassung einer Kolbenposition gemäß dem Oberbegriff des Anspruchs 1, sowie die Verwendung eines solchen Sensors.

Induktive Sensoren werden häufig an einem Gehäuse eines Arbeitszylinders angeordnet und haben sich zur genauen Positionsbestimmung durch berührungsloses Erfassen der Stellung von z. B. Pneumatik- oder Hydraulikkolben innerhalb des Arbeitszylinders bewährt. Ein solcher Sensor ist beispielsweise aus der DE 10 2006 008 157 A1 bekannt. Dieser bekannte Sensor kann zwei bestimmte Kolbenpositionen erfassen. Einfachere Sensoren erfassen jeweils nur eine Kolbenposition.

Die elektrische Versorgung des Sensors sowie die Übertragung des Schaltsignals erfolgt über eine elektrische Leitung. Die Verlegung der Anschlussleitungen ist sehr material- und zeitaufwändig, da die Sensoren typischerweise in Industrieanlagen eingesetzt werden und an einer einzigen Maschine bereits eine Vielzahl solcher Sensoren eingesetzt werden müssen. Kabelbäume mit 20 bis 30 Leitungen kommen häufig vor. Die Leitungen werden dann über Schleppketten an den beweglichen Teilen geführt. Leitungsbrüche sind die häufigsten Ausfallursachen bei diesen Sensoren (ca. 80% der Ausfälle). Auch die Anbindung zwischen Sensorgehäuse und Anschlusskabel stellt im Bezug zur Dichtheit ebenfalls einen Schwachpunkt dar.

Es gibt von einigen Herstellern Pilotanlagen, in denen drahtlose Sensoren betrieben werden. So bietet ABB drahtlose Sensoren an, deren Energieversorgung über riesige Leiterschteifen induktiv eingekoppelt wird, wobei die Leiterschleifen die gesamte Roboterzelle umspannen. Derartige Leiterschleifen sind sehr platz-, montage- und kostenaufwändig und die eingestrahlte Energie ist sehr hoch.

Aus der DE 43 42 069 ist ein Positionsdetektor bekannt, dessen Detektoreinheiten gleichzeitig als Energiespeichereinheiten dienen. In einem Ausführungsbeispiel dieses Dokuments ist ein Positionsgeber zur Überwachung einer Linearverschiebung offenbart, bei dem der sich linear bewegende Körper eine Vielzahl von in regelmäßigen Abständen angeordneten Permanentmagneten aufweist, die zueinander antiparallel angeordnet sind und die zwei drehbar angeordnete Permanentmagnete beeinflussen, die wiederum über Spulenkerne Induktionsspulen beeinflussen. Die beiden Permanentmagnete und zugehörige Spulen mit Spulenkernen müssen in einem speziellen Abstand zueinander, der von dem Abstand der regelmäßig angeordneten Permanentmagnete des bewegten Körpers abhängt, angeordnet sein. Ein solcher Sensor ist allerdings nicht geeignet an einem Arbeitszylinder angeordnet zu werden und von außen die Kolbenposition zu erfassen. Zum einen kann man in einem Arbeitszylinder nur einen Magneten verwenden, da auf der Kolbenstange keine Magneten angeordnet werden können, sondern nur auf dem Kolben selbst, und zum anderen müsste der Positionssensor in einer ganz bestimmten Position am Umfang des Zylinders angeordnet sein, da die Magnete auf der Schubstange nach dem Stand der Technik nicht rotationssymmetrisch um die Längsachse sind, was aber in einem Zylindersensor notwendig wäre Üblicherweise werden von den Maschinenherstellern Ringmagnete auf den Kolben eingesetzt, die eine Ausbildung eines Sensors nach der DE 43 42 069 unmöglich machen.

Aus der DE 100 13 525 A2 ist ein Positionssensor bekannt, der eine eigene Energieversorgungseinheit zur Energieversorgung einer Auswerteeinheit aufweist. Die Energieversorgungseinheit besteht aus zwei Kondensatoren, die über eine Antennenspule über Hochfrequenzeinkopplung aufladbar sind. Die Antennenspule dient gleichzeitig zum drahtlosen Senden von Positionssignalen an eine übergeordnete Steuerung. Die US 5 565 769 beschreibt einen Positionssensor mit Energiespeicherung.

Davon ausgehend ist es Aufgabe der Erfindung, einen verbesserten magnetischen oder induktiven Sensor zur Erfassung einer Kolbenposition von außerhalb eines Arbeitszylinders bereitzustellen, der kabellos arbeiten kann und dabei einfach, kompakt und kostengünstig aufgebaut ist.

Diese Aufgabe wird gelöst durch einen Sensor mit den Merkmalen des Anspruchs 1.

Der erfindungsgemäße Sensor weist eine elektronische Auswerteeinheit auf, mit der eine Kolbenposition, also die Position eines Kolbenmagneten, erfassbar ist und die ein die Kolbenposition repräsentierendes Signal abgeben kann. Der Sensor ist gekennzeichnet durch eine Energieversorgungseinheit zur Energieversorgung der Auswerteeinheit, wobei die Energieversorgungseinheit wenigstens eine Spule und wenigstens einen um eine Rotationsachse drehbar gelagerten Energiewandlermagneten aufweist, der in Wirkverbindung mit der Spule steht und dass das Signal drahtlos von dem Sensor an eine übergeordnete Steuerung oder an andere Sensoren übertragbar ist.

Bei einer Bewegung des Kolbens wird über den Kolbenmagneten und durch die magnetische Kopplung ein Drehmoment auf den Energiewandlermagneten ausgeübt, so dass dieser in seiner Lagerung rotieren kann. Bei Rotation des Energiewandlermagneten wird aufgrund der Wirkverbindung mit der Spule eine magnetische Flussänderung dΦ/dt und damit eine Spannung U in der Spule induziert. Die so erzeugte Spannung kann genutzt werden, um den Sensor mit Energie zu versorgen und zu betreiben, das heißt die Kolbenposition zu erfassen und ein die Kolbenposition repräsentierendes Signal an einen Empfänger einer übergeordneten Steuerung zu übertragen.

Aufgrund der sensoreigenen, autarken Energieversorgung ist für den Betrieb des Sensors weder eine Batterie noch eine Anschlussleitung notwendig. Das reduziert nicht nur den Montage- und Installationsaufwand erheblich, sondern es sind weder Schleppketten noch Kabelkanäle erforderlich. Durch den somit möglichen Verzicht auf sämtliche Kabel für den erfindungsgemäßen Sensor wird die Verfügbarkeit der Anlage, in der die Sensoren eingesetzt werden, erheblich erhöht und Stillstandszeiten der Anlage reduziert, da ein Ausfall durch Leitungsbrüche nicht mehr auftreten kann. Daneben sind neue Anwendungen mit frei bewegbaren, also ungebundenen Magnetsensoren möglich.

Des Weiteren ist eine völlige Kapselung des Sensors möglich, was insbesondere in Anlagen für die Lebensmittelindustrie, bei der aggressive Reinigungsmittel eingesetzt werden, oder auch in Anwendungen mit Explosionsschutzbedingungen vorteilhaft ist.

Einen weiteren Vorteil stellt der mit der Kabelfreiheit einhergehende einfache Austausch von Sensoren dar.

Die erzeugte Energie ist abhängig von der magnetischen Flussänderung, also auch von der Geschwindigkeit, mit der der Energiewandlermagnet rotiert. Da in realen Anwendungen die Kolben in den Arbeitszylindern zumeist sehr schnell bewegt werden, wird ausreichend Energie erzeugt. Da die Energieversorgungseinheit mit der Spule und dem Energiewandlermagneten ausreichend klein ausgestaltet werden kann und lediglich eine Rotation des Energiewandlermagneten erfolgt, kann insgesamt der erfindungsgemäße Sensor sehr kompakt, klein und kostengünstig ausgeführt werden. Das eröffnet die Möglichkeit, den erfindungsgemäßen Sensor in bekannter Weise (wie beispielsweise in DE 196 43 413 A1 oder DE 196 53 222 A1 beschrieben) in vorhandene Befestigungsnuten an einem Arbeitszylinder zu platzieren.

Der Energiewandlermagnet ist rotationssymmetrisch ausgebildet und diametral magnetisiert. Ein rotationssymmetrischer und diametral magnetisierter Energiewandlermagnet ist in einfacher Weise rotationsfrei lagerbar und kann durch einfache Anordnung mit der Spule in effizienter Wirkverbindung gebracht werden.

In einer ersten Ausführungsform der Erfindung erfolgt die Wirkverbindung über einen Spulenkern der Spule, dessen eine Ende im Einflussbereich des Magnetfelds des Energiewandlermagneten liegt. Auf diese Weise können die Spule und der Energiewandlermagnet nebeneinander angeordnet werden bei gleichzeitig sehr wirksamer magnetischer Kopplung über den Spulenkern.

Wenn die Polrichtung des Kolbenmagneten in Längsrichtung des Hubweges liegt, kann eine mehr als 180° Rotation des Energiewandlermagneten bewirkt werden, was eine entsprechend höhere Energieausbeute zur Folge hat. Wenn beispielsweise mit dieser Maßnahme eine zweimalige Ummagnetisierung im Spulenkern erfolgt, ist die Energieausbeute weiter erhöht.

In Weiterbildung der Erfindung kann die Energieausbeute gegebenenfalls weiter erhöht werden, wenn mehrere Energiewandlermagnete bevorzugt in gleichem Abstand zueinander vorgesehen sind und insbesondere wenn jedem der Energiewandlermagnete eine eigene Spule zugeordnet ist.

In zweckmäßiger Weise ist der Energiewandlermagnet in einer Führung, beispielsweise in einer Hülse, rotationsfrei gelagert. Eine Rotation in einer Hülse mit vorzugsweise geringem Reibungskoeffizienten ist eine sehr verschleißarme Bewegung im Gegensatz zu linear bewegten Teilen, so dass der Sensor eine hohe Lebensdauer hat.

Auch eignet sich ein rotierender Energiewandlermagnet insbesondere für hohe Kolbengeschwindigkeiten besser als ein sich linear verschiebender, da es bei hohen Kolbengeschwindigkeiten vorkommen kann, dass der linear bewegte Energiewandlermagnet aufgrund der Trägheit nicht mehr mitbewegt wird.

Der Sensor kann sehr kostengünstig hergestellt werden und eine kompaktere Bauform erhalten, wenn die Spule als Printspule auf einer mehrschichtigen Leiterplatte ausgebildet ist und der Spulenkern zwischen zwei Lagen der Leiterplatte vorgesehen ist.

Für eine kompakte Bauform, insbesondere wenn mehrere Energiewandlermagnete vorgesehen sind, ist es vorteilhaft, wenn der Energiewandlermagnet innerhalb der Spule angeordnet ist.

Vorteilhafterweise ist eine Energiespeichereinheit vorgesehen zur Zwischenspeicherung der von der Energieversorgungseinheit erzeugten Energie. Damit steht zu Zeitpunkten Energie zur Verfügung, in denen die Energieversorgungseinheit selbst keine Energie erzeugt, so dass einzelne Energie- bzw. Spannungsimpulse zwischengespeichert werden können, um einen kontinuierlichen Betrieb der Auswerteeinheit über einen zum Erzeugen und/oder Senden der Signale notwendigen Zeitraum zu gewährleisten.

In Weiterbildung der Erfindung kann die Spannungsinduktion durch den Energiewandlermagneten auch als Auslöser für das Positionssignal genutzt werden.

Wenn der Sensor ein hermetisch dichtes Gehäuse aufweist, ist er mit besonderem Vorteil in Arbeitsbereichen einsetzbar, in denen aggressive oder gefährliche Medien zur Anwendung gelangen, beispielsweise im Lebensmittelbereich, wo zu Reinigungszwecken aggressive Reinigungsmittel verwendet werden oder in Applikationen, in denen explosive Medien eingesetzt werden.

Mit besonderem Vorteil ist der erfindungsgemäße Sensor zur Kolbenlagenbestimmung an einem Pneumatik- oder Hydraulikzylinder einsetzbar. Dabei könnte der Sensor vollständig, mit Ausnahme einer Antenne, in den Pneumatik- oder Hydraulikzylinder integriert sein, da er kabellos arbeitet und keinerlei Energieversorgung benötigt. Dadurch ist die Handhabung und Reinigung eines solchen Zylinders erheblich erleichtert.

Im Folgenden wird die Erfindung anhand von Ausführungsbeispielen unter Bezugnahme auf die Zeichnung im Einzelnen erläutert. In der Zeichnung zeigen:
- Fig. 1: eine schematische Darstellung eines erfindungsgemäßen Sensors an einem Arbeitszylinder;
- Fig. 2 und 3: schematische Darstellungen eines Teils einer Energieversorgungseinheit des erfindungsgemäßen Sensors an einem Arbeitszylinder bei unterschiedlichen Kolbenstellungen;
- Fig. 4: ein Diagramm zur Verdeutlichung der Spannungsinduktion.

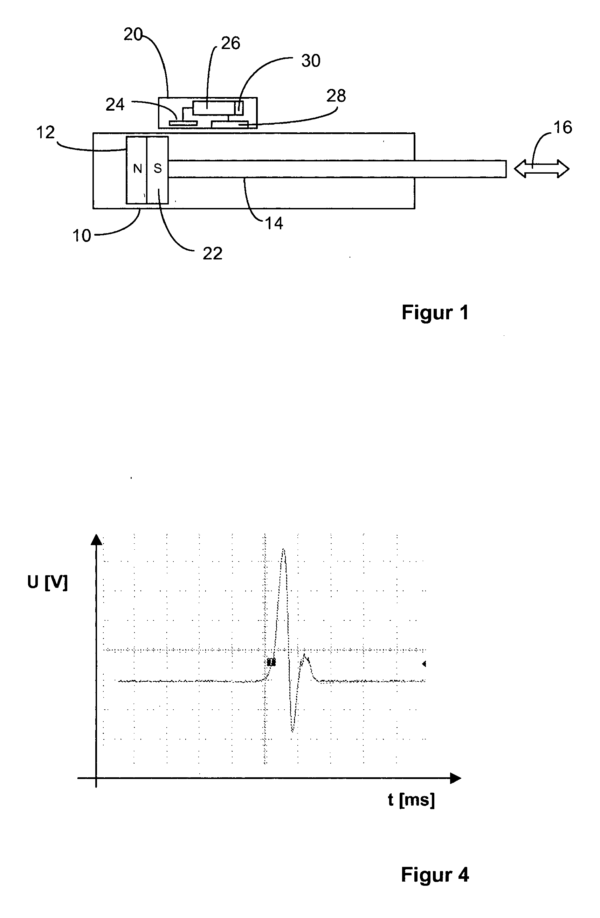

Ein in Fig. 1 dargestellter Arbeitszylinder 10, der ein Pneumatikzylinder eines nicht dargestellten Industrieroboters sein kann, enthält einen Kolben 12, der mittels einer Kolbenstange 14 in dem Arbeitszylinder 10 in Längsrichtung des Zylinders (Pfeil 16) innerhalb seiner beiden Endstellungen bewegbar ist. Die Kolbenposition ist mittels eines magnetischen Sensors 20 ermittelbar, wobei der Kolben 12 einen als Dauermagneten ausgebildeten Kolbenmagneten 22 trägt, dessen Position der Sensor 20 erfassen kann. Ein derartiger Sensor 20 ist beispielsweise beschrieben in der DE 10 2004 046 107 A1.

Der Sensor 20 ist in der Zeichnung (Fig. 1) nur schematisch dargestellt und enthält wenigstens ein magnetisches Sensorelement 24, das auf das Magnetfeld des Kolbenmagneten 22 reagiert, eine Auswerteeinheit 26, die bevorzugt in einem Mikrocontroller realisiert ist und in der die Signale des Sensorelementes 24 weiterverarbeitet werden, sowie gegebenenfalls notwendige Speicher. Der Sensor 20 ist an dem Arbeitszylinder 10 derart positioniert, dass er die gewünschte Kolbenposition über das Sensorelement 24 erfassen kann oder er ist dazu ausgebildet, elektronisch auf bestimmte Kolbenpositionen eingestellt werden zu können. Häufig müssen nur die Kolbenendpositionen erfasst werden.

Erfindungsgemäß weist der Sensor 20 eine Energieversorgungseinheit 28 auf, die dazu geeignet ist, den Sensor 20 mit elektrischer Energie zu versorgen und die weiter unten näher erläutert wird. Des Weiteren weist der Sensor 20 eine Übertragungseinheit 30 auf, mittels derer Signale des Sensors 20, die unter anderem die Kolbenposition anzeigen, an eine übergeordnete Steuerung drahtlos übertragbar sind.

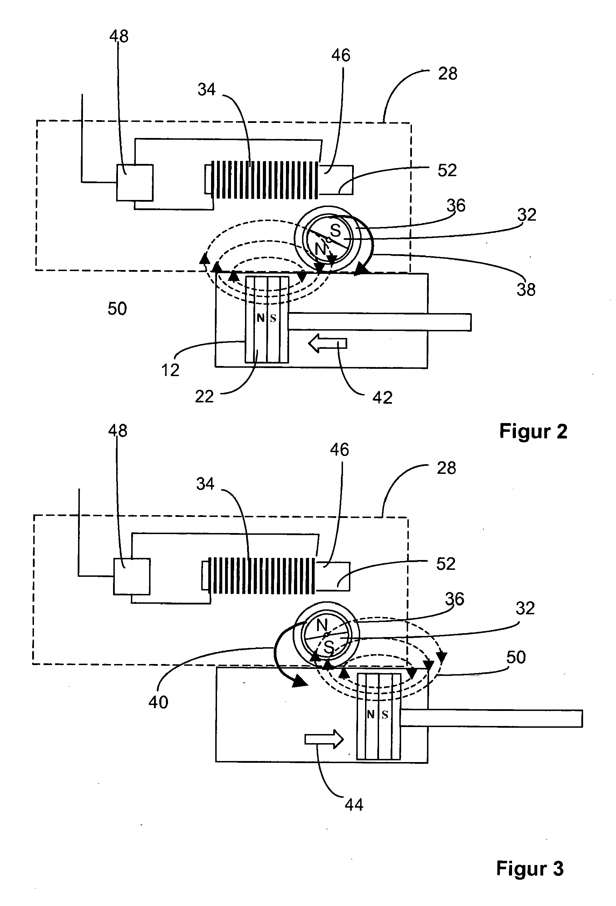

In Fig. 2 und 3 sind neben dem Arbeitszylinder 10 die wesentlichen Elemente der Energieversorgungseinheit 28 schematisch dargestellt. In diesem ersten Ausführungsbeispiel weist die Energieversorgungseinheit 28 einen als Dauermagneten ausgebildeten Energiewandlermagneten 32 auf, der in Wirkverbindung mit einer Spule 34 rotationsfrei gelagert ist. Die Lagerung kann beispielsweise aus einer als Hülse ausgebildeten Führung 36 bestehen, in der der Energiewandlermagnet 32 drehbar gehalten ist und sich somit in Drehrichtungen 38 und 40 drehen kann. Der Energiewandlermagnet 32 ist entsprechend rotationssymmetrisch ausgebildet und diametral magnetisiert. Die Rotationsachse des Energiewandlermagneten 32 ist quer, bevorzugt senkrecht, zur Hubbewegungsrichtung 16 des Kolbens angeordnet.

Bei Bewegung des Kolbens 12 (Pfeile 42 und 44) wird der Kolbenmagnet 22 an dem in Bezug zum Arbeitszylinder feststehenden Energiewandlermagneten 32 vorbeigeführt und übt aufgrund der magnetischen Kopplung (dargestellt durch Magnetfeldlinien 50) auf diesen Drehmomente aus, so dass der Energiewandlermagnet 32 sich je nach Richtung der Bewegung des Kolbens 12 entweder in Richtung 38 oder Richtung 40 dreht.

Der Energiewandlermagnet 32 steht über einen Spulenkern 46 der Spule 34 in Wirkverbindung mit der Spule 34, wobei sich das eine Ende 52 des Spulenkerns 46 in unmittelbarer Nähe des Umfangs des Energiewandlermagneten 32 befindet. Der Spulenkern 46 dient als magnetischer Flussverstärker und ist beispielsweise als Ferrit ausgeführt. Der Abstand zwischen dem Spulenkern 46 und dem Energiewandlermagneten 32 muss geeignet gewählt sein, dass einerseits eine Drehbewegung des Energiewandlermagneten 32 möglich ist und gleichzeitig eine ausreichende magnetische Kopplung zwischen Energiewandlermagneten und Spulenkern gegeben ist, so dass der Spulenkern die Änderungen des Magnetfeldes erfasst. Bei zu geringen Abständen wird sich der Energiewandlermagnet 32 nicht drehen und bei zu großen Abständen wird die Feldänderung am Ort des Spulenkerns 46 zu klein sein.

Die durch die Rotation bewirkte Änderung des Magnetfeldes des Energiewandlermagneten 32 wird über den Spulenkern 46 in die Spule 34 übertragen. So erfolgt in der Spule 34 eine Änderung des magnetischen Flusses Φ und damit eine der Flussänderung dΦ/dt entsprechende Induktion einer Spannung U. Dies ist schematisch in Fig. 4 dargestellt. Diese Spannung wird einer Energieversorgungselektronik 48 zugeführt und dort entsprechend verarbeitet, um letztendlich den Sensor 20 mit elektrischer Energie versorgen zu können. Die Energieversorgungselektronik 48 kann einen Energiespeicher aufweisen, um die erzeugte Energie, die nur über kurze Zeiträume erzeugt wird (beim direkten Vorbeifahren des Kolbenmagneten), auch zu Zeitpunkten, an denen die Flussänderungen abgeklungen ist, zur Verfügung stehen zu haben, beispielsweise um das Kolbenpositionssignal oder andere Daten zu senden oder zu empfangen.

Besonders hohe Induktionsspannungen U werden erreicht, wenn im Spulenkern 46 eine Ummagnetisierung erfolgt, was der Fall ist, wenn die Polgrenze (Übergang vom Nord- zum Südpol) an dem Ende 52 des Spulenkerns 46 vorbeibewegt wird, denn die Ummagnetisierung erfolgt schlagartig. Deshalb ist es vorteilhaft, wenn das Ende 52 des Spulenkerns 46 so angeordnet ist, dass bei der Drehbewegung des Energiewandlermagneten 32 die Polgrenze zweimal vorbeibewegt wird bei einfachem Vorbeifahren des Kolbenmagneten. Dies ist möglich, da in der in Fig. 2 und 3 dargestellten Ausrichtung des Energiewandlermagneten 32 und Kolbenmagneten 22 der Energiewandlermagnet 32 um mehr als 180° rotiert, wenn der Kolbenmagnet 22 vorbeibewegt wird, wie dies bereits aus den in den Fig. 2 und 3 dargestellten Momentaufnahmen ersichtlich ist.

Relativ hohe Induktionsspannungen werden auch aufgrund folgenden Effektes erreicht: Aufgrund der Ausrichtung des Kolbenmagneten 22 (Polrichtung in Längsrichtung des Hubweges) werden beide Pole des Kolbenmagneten 22 an dem Energiewandlermagneten 32 vorbeigeführt, wodurch ein Teil der Drehbewegung schlagartig erfolgt, wenn nämlich in einer Phase der Bewegung der Südpol des Kolbenmagneten 22 dem Energiewandlermagneten 32 am nächsten ist und im nächsten Moment der Bewegung der Nordpol am nächsten ist. Dadurch ist der Vorteil gegeben, dass auch bei langsamen Kolbenbewegungen noch ausreichend Energie erzeugt wird.

Insgesamt ergibt sich ein typischer Induktionsspannungsverlauf, wie er in Fig. 4 dargestellt ist.

In einer weiteren, nicht dargestellten Ausführungsform der Erfindung kann die Spule als Printspule auf einer mehrschichtigen Leiterplatte ausgebildet sein. Der Spulenkern ist dann als Zwischenschicht zwischen zwei Lagen der Leiterplatte vorgesehen. Eine derartige Ausbildung der Spule mit Spulenkern kann kostengünstig hergestellt werden und als sehr kompakte Einheit Bauraum sparen.

In einer weiteren, nicht dargestellten Ausführungsform der Erfindung befindet sich der Energiewandlermagnet 32 innerhalb der Spule, so dass gegebenenfalls in dieser Ausführungsform auf einen Flussverstärker verzichtet werden kann. Eine solche Anordnung hat den Vorteil, dass kompaktere Bauformen möglich sind.

Da es in vielen Anwendungen häufig vorkommt, dass nur eine Kolbenposition zu erfassen oder nur eine Vorbeibewegung des Kolbens an dem Sensor zu detektieren ist, kann in einer Ausführungsform der Erfindung das Kolbenpositionssignal ausgelöst werden, wenn die Energieversorgungseinheit aktiv geworden ist, wenn also eine Spannung in der Spule 34 durch den Energiewandlermagneten 32 induziert wurde. In einem solchen Fall könnte das Sensorelement 24 entfallen und der Sensor 20 insgesamt noch kostengünstiger ausgestaltet werden. Allerdings wäre es dann notwendig, den Sensor 20 korrekt an dem Arbeitszylinder zu positionieren, damit ein Schaltsignal bei der gewünschten Kolbenposition auftritt.

Da der erfindungsgemäße Sensor 20 vollständig kabellos arbeitet, kann ein Gehäuse des Sensors hermetisch dicht ausgestaltet werden. Er könnte sogar vollständig, mit Ausnahme einer Antenne, in einen Pneumatik- oder Hydraulikzylinder integriert werden.

## Patentansprüche

1. Magnetischer oder induktiver Sensor (20) zur Erfassung einer Kolbenposition entlang eines Hubwegs eines Kolbens (12) eines Arbeitszylinders (10), wobei der Kolben einen als Dauermagneten ausgebildeten Kolbenmagneten (22) trägt, mit einer elektronischen Auswerteeinheit (26), mit der die Kolbenposition erfassbar ist und die ein die Kolbenposition repräsentierendes Signal abgeben kann und mit einer Energieversorgungseinheit (28) zur Energieversorgung der Auswerteeinheit (26), wobei das Signal drahtlos von dem Sensor an eine übergeordnete Steuerung oder an andere Sensoren übertragbar ist, **dadurch gekennzeichnet dass** die Energieversorgungseinheit (28) wenigstens eine Spule (34) und wenigstens einen um eine quer zur Hubbewegungsrichtung (16) des Kolbens (12) angeordnete Rotationsachse drehbar gelagerten und als Dauermagnet ausgebildeten Energiewandlermagneten (32) aufweist, der in Wirkverbindung mit der Spule (34) steht und auf den aufgrund magnetischer Kopplung mit dem Kolbenmagneten (22) ein Drehmoment ausübbar ist, wobei der Energiewandlermagnet (32) rotationssymmetrisch ausgebildet und diametral magnetisiert ist und wobei die Polrichtung des Kolbenmagneten (22) in Längsrichtung des Hubweges liegt.

2. Sensor nach einem der vorhergehenden Ansprüche, **dadurch gekennzeichnet, dass** die Wirkverbindung über einen Spulenkern der Spule erfolgt, dessen eine Ende im Einflussbereich des Magnetfelds des Energiewandlermagneten liegt.

3. Sensor nach Anspruch 2, **dadurch gekennzeichnet, dass** das Ende des Spulenkerns derart angeordnet ist, dass bei Vorbeibewegen des Kobenmagnetes im Spulenkern zweimal eine Ummagnetisierung erfolgt.

4. Sensor nach einem der vorhergehenden Ansprüche, **dadurch gekennzeichnet, dass** mehrere Energiewandlermagnete in bevorzugt gleichem Abstand vom Arbeitszylinder angeordnet sind.

5. Sensor nach Anspruch 4, **dadurch gekennzeichnet, dass** jedem Energiewandlermagnet eine eigene Spule zugeordnet ist.

6. Sensor nach einem der vorhergehenden Ansprüche, **dadurch gekennzeichnet, dass** der Energiewandlermagnet in einer Führung rotationsfrei gelagert ist..

7. Sensor nach einem der vorhergehenden Ansprüche, **dadurch gekennzeichnet, dass** die Spule als Printspule auf einer mehrschichtigen Leiterplatte ausgebildet ist und der Spulenkern zwischen zwei Lagen der Leiterplatte vorgesehen ist.

8. Sensor nach einem der vorhergehenden Ansprüche, **dadurch gekennzeichnet, dass** der Energiewandlermagnet innerhalb der Spule angeordnet ist.

9. Sensor nach einem der vorhergehenden Ansprüche, **dadurch gekennzeichnet, dass** eine Energiespeichereinheit vorgesehen ist zur Zwischenspeicherung der von der Energieversorgungseinheit erzeugten Energie.

10. Sensor nach einem der vorhergehenden Ansprüche, **dadurch gekennzeichnet, dass** die Wirkung des Energiewandlermagneten auf die Spule als Auslöser für das Signal genutzt wird.

11. Sensor nach einem der vorhergehenden Ansprüche, **gekennzeichnet durch** ein hermetisch dichtes Gehäuse.

12. Verwendung eines Sensors nach einem der vorhergehenden Ansprüche zur Integration in einen Pneumatik- oder Hydraulikzylinder.

## Claims

1. Magnetic or inductive sensor (20) for detecting a piston position along a stroke path of the piston (12) of a working cylinder (10), wherein the piston carries a piston magnet (22) formed as a permanent magnet, with an electronic evaluation unit (26) with which the piston position is detectable and which can give a piston position representative signal, and with a power supply unit (28) for power supply of the evaluation unit, wherein the signal is transmitted wirelessly from the sensor to a higher-level controller or other sensors, **characterized in that** the power supply unit (28) comprises at least a coil (34) and at least an energy converter magnet (32) formed as a permanent magnet and mounted rotatably about a rotational axis which lies crosswise to the stroke movement direction (16) of the piston (12), the converter magnet is in operative connection with the coil (34) and a torque can be exerted on the converter magnet due to magnetic coupling with the piston magnet (22), wherein the energy converter magnet (32) is designed rotationally symmetrical and is diametrically magnetised, and wherein the pole direction of the piston magnet (22) lies in the longitudinal direction of the stroke.

2. Sensor according to one of the preceding claims, **characterized in that** the operative connection takes place via a coil core of the coil, one end of which lies in the area of influence of the magnetic field of the energy converter magnet.

3. Sensor according to claim 2, **characterized in that** the end of the coil core is arranged such that a reversal of the magnetisation of the coil core takes place twice when the piston magnet goes by.

4. Sensor according to one of the preceding claims, **characterized in that** several energy converter magnets are arranged prefererably in equal spacing from the working cylinder.

5. Sensor according to claim 4, **characterized in that** each power converter has its own coil assigned.

6. Sensor according to one of the preceding claims, **characterized in that** the energy converter magnetic is stored rotational free in a guide.

7. Sensor according to one of the preceding claims, **characterized in that** the coil is designed as a printed coil on a multilayer printed circuit board and the coil core is provided between two layers of the printed circuit board.

8. Sensor according to one of the preceding claims, **characterized in that** the energy converter magnet is arranged inside the magnetic coil.

9. Sensor according to one of the preceding claims, **characterized in that** an energy storage unit is provided for intermediate storage of the energy generated by the power supply unit.

10. Sensor according to one of the preceding claims, **characterized in that** the effect of the energy converter magnet on the magnet coil is used as the trigger for the signal.

11. Sensor according to one of the preceding claims, **characterized by** a hermetically sealed housing.

12. Use of a sensor according to any one of the preceding claims for integration into a pneumatic or hydraulic cylinder.

## Revendications

1. Capteur magnétique ou inductive (20) pour détecter une position du piston le long d'un chemin de course du piston (12) d'un cylindre de travail (10), dans lequel le piston porte un aimant de piston (22) formé comme un aimant permanent, avec une électronique d'évaluation unité (26) avec laquel la position du piston est détectable et qui peut donner un signal représentatif de la position du piston, et avec une unité d'alimentation électrique (28) pour l'alimentation électrique de l'unité d'évaluation , dans lequel le signal est transmis sans fil à partir du capteur à une commande ultérieure-niveau ou à des autres capteurs , **caractérisés en ce que** l'unité d'alimentation (28) comprend au moins une bobine (34) et au moins un aimant de conversion d'énergie (32) formé comme un aimant permanent et monté à rotation autour d'un axe de rotation qui se situe transversalement à la direction de mouvement de course (16) du piston (12), l'aimant de convertisseur est en liaison d' opération avec la bobine (34) et un couple peut être exercée sur l'aimant du convertisseur en raison du couplage magnétique avec l'aimant du piston (22), l'aimant de conversion d'énergie (32) est conçu à symétrie de révolution et est aimanté diamétralement, et la direction polaire de l'aimant de piston (22) se situe dans la direction longitudinale de la course.

2. Capteur selon l'une des revendications précédentes, **caractérisé en ce que** la liaison fonctionnelle s'effectue au moyen d'un noyau de bobine de la bobine, dont une extrémité se trouve dans la zone d'influence du champ magnétique du convertisseur de l'aimant de conversion d'énergie.

3. Capteur selon la revendication 2, **caractérisé en ce que** l'extrémité du noyau de bobine est disposé de telle sorte qu'une inversion de l'aimantation du noyau de bobine a lieu deux fois lorsque l'aimant de piston passe.

4. Capteur selon l'une des revendications précédentes, **caractérisé en ce que** plusieurs aimants de conversion d'énergie sont disposés dans un distance égal prefererably du cylindre de travail.

5. Capteur selon la revendication 4, **caractérisé en ce que** chaque aimant de conversion d'énergie possède sa propre bobine affectée.

6. Capteur selon l'une des revendications précédentes, **caractérisé en ce que** l'aimant de conversion d'énergie est stockée en rotation libre dans un guide.

7. Capteur selon l'une des revendications précédentes, **caractérisé en ce que** la bobine est réalisée sous forme d'une bobine imprimée sur une carte de circuit imprimé multicouche et le noyau de bobine est disposée entre deux couches de la carte de circuit imprimé.

8. Capteur selon l'une des revendications précédentes, **caractérisé en ce que** l'aimant de conversion d'énergie est disposé à l'intérieur de la bobine magnétique.

9. Capteur selon l'une des revendications précédentes, **caractérisé en ce qu'**une unité de stockage d'energie est prévue pour le stockage intermédiaire de l'énergie générée par l'unité d'alimentation.

10. Capteur selon l'une des revendications précédentes, **caractérisé en ce que** l'effet de l'aimant convertisseur d'énergie à la bobine d'aimant est utilisé comme déclencheur pour le signal.

11. Capteur selon l'une des revendications précédentes, **caractérisé par** un boîtier hermétiquement scellé.

12. Utilisation d'un capteur selon l'une quelconque des revendications précédentes, destiné à l'intégration dans un cylindre pneumatique ou hydraulique.
